(19) Europäisches Patentamt
European Patent Office
Office européen des brevets

(11) **EP 2 061 672 B1**

(12) **EUROPÄISCHE PATENTSCHRIFT**

(45) Veröffentlichungstag und Bekanntmachung des Hinweises auf die Patenterteilung:
**03.01.2018 Patentblatt 2018/01**

(21) Anmeldenummer: **06805285.1**

(22) Anmeldetag: **12.09.2006**

(51) Int Cl.:
**B60L 13/06** *(2006.01)*

(86) Internationale Anmeldenummer:
**PCT/DE2006/001623**

(87) Internationale Veröffentlichungsnummer:
**WO 2008/031368 (20.03.2008 Gazette 2008/12)**

(54) **VERFAHREN UND ANORDNUNG ZUM MESSEN EINES SPALTS**

METHOD AND ARRANGEMENT FOR MEASURING A GAP

PROCEDE ET ARRANGEMENT POUR MESURER UN ENTREFER

(84) Benannte Vertragsstaaten:
**DE GB NL**

(43) Veröffentlichungstag der Anmeldung:
**27.05.2009 Patentblatt 2009/22**

(73) Patentinhaber: **Siemens Aktiengesellschaft
80333 München (DE)**

(72) Erfinder: **SCHMID, Robert
91077 Neunkirchen am Brand (DE)**

(56) Entgegenhaltungen:
**DE-A1- 3 208 896    DE-A1- 3 323 344
FR-A- 2 161 617**

## Beschreibung

Die Erfindung bezieht sich auf ein Verfahren zum Messen des Spalts zwischen einem Schwebemagneten eines Fahrzeugs einer Magnetschwebebahn und einer ortsfesten Reaktionsschiene der Magnetschwebebahn und zum Erzeugen eines die Größe des Spalts angebenden Spaltmesswertes.

Ein derartiges Verfahren ist beispielsweise von Magnetschwebebahnen des Typs Transrapid bekannt. Das Messen des Spaltes erfolgt zu Regelungszwecken, damit das Schienenfahrzeug stets in einem vorgesehenen Abstandsbereich schwebend oberhalb der Stecke gehalten werden kann.

Weitere Verfahren zur Spaltmessung bei Magnetschwebebahnen sind aus der DE 32 08 896 A1, FR 2 161 617 A und DE 33 23 344 A1 bekannt.

Der Erfindung liegt die Aufgabe zugrunde, ein Verfahren zum Spaltmessen anzugeben, das sich mit besonders wenig Aufwand durchführen lässt.

Diese Aufgabe wird erfindungsgemäß durch ein Verfahren mit den Merkmalen gemäß Anspruch 1 gelöst. Vorteilhafte Ausgestaltungen des erfindungsgemäßen Verfahrens sind in Unteransprüchen angegeben.

Danach ist erfindungsgemäß vorgesehen, dass zum Bilden des Spaltmesswertes das vom Schwebemagneten erzeugte Magnetfeld oder zumindest eine damit zusammenhängende Messgröße ausgewertet wird.

Ein wesentlicher Vorteil des erfindungsgemäßen Verfahrens ist darin zu sehen, dass bei diesem keine aktiven Messkomponenten, also beispielsweise keine Messkomponenten mit eigener Magnetfelderzeugung, erforderlich sind; denn die erfindungsgemäße Spaltmessung wertet die Magnetfeldverteilung aus, die vom Schwebemagneten sowieso erzeugt wird; es müssen also für die Spaltmessung beispielsweise keine zusätzlichen Felder erzeugt werden.

Durch die erfindungsgemäße Doppelnutzung des vom Schwebemagneten erzeugten Magnetfeldes lässt sich die Spaltmessung baulich beispielsweise vollständig in den Schwebemagneten integrieren, wodurch Herstellungs-, insbesondere Montagekosten reduziert werden.

Vorzugsweise erfolgt das Ermitteln des Spaltmesswerts ausschließlich unter Berücksichtigung des vom Schwebemagneten erzeugten Magnetfelds.

Erfindungsgemäß ist es vorgesehen, dass der den Schwebemagneten durchfließende Magnetstrom durch Modulation der am Schwebemagneten anliegenden Magnetspannung moduliert wird, die Änderung des Magnetstroms aufgrund der Modulation der Magnetspannung erfasst wird und ein die Induktivität des magnetischen Systems aus Schwebemagnet, Reaktionsschiene und Spalt angebender Induktivitätswert ermittelt wird, und mit dem Induktivitätswert und dem Magnetstromwert der Spaltmesswert gebildet wird. Die Verwertung des Induktivitätswerts ist möglich, weil der Spalt den magnetischen Fluss und damit die resultierende Induktivität maßgeblich beeinflusst. Diese erste Variante des Verfahrens weist den Vorteil auf, dass die gesamte Spaltmessung in die elektrische Ansteuerung bzw. Ansteuerungselektrik des Schwebemagneten integriert werden kann, so dass die Hardwarekosten für die Spaltmessung sehr klein werden.

Der Induktivitätswert wird bevorzugt unter Berücksichtigung der zeitlichen Änderung des Magnetstromswerts und der Änderung der Magnetspannung errechnet. Beispielsweise wird der Induktivitätswert errechnet gemäß

$$L = (\Delta Um * \Delta t) / \Delta Im$$

wobei $\Delta Um$ die Änderung der Magnetspannung, $\Delta Im$ die Änderung des Magnetstroms und $\Delta t$ die für die Änderung des Magnetstroms erforderliche Zeitspanne bezeichnen.

Zum Gewinnen des Spaltmesswerts wird vorzugsweise ein vorab ermitteltes Kennlinienfeld herangezogen, in dem Spaltwerte für verschiedene Induktivitäten und Magnetstromwerte bzw. für entsprechende Messwertpaare eingetragen sind.

Das Kennlinienfeld wird vorzugsweise anhand von vorab durchgeführten Messungen an dem Schwebemagneten und der Reaktionsschiene für verschiedene Spaltgrößen oder anhand von Messungen an baugleichen Schwebemagneten und baugleichen Reaktionsschienen oder anhand einer Simulation des magnetischen Systems aus Schwebemagneten, Reaktionsschiene und Spalt erstellt.

Bei hohen Magnetströmen kann unter Umständen das Problem auftreten, dass die Spaltmessung aufgrund von Sättigungserscheinungen im Magneteisen des Schwebemagneten und/oder der Reaktionsschiene verfälscht wird: Beispielsweise kann die Eindeutigkeit der Zuordnung zwischen Induktivität und Spalt verloren gehen. Aus diesem Grunde wird es als vorteilhaft angesehen, wenn für Magnetstromwerte unterhalb einer vorgegebenen Grenze der in der beschriebenen Weise aus dem Kennlinienfeld ausgelesene Spaltwert als Spaltmesswert weiter verwendet wird und wenn für Magnetstromwerte oberhalb der Grenze eine weitere Messung erfolgt.

Vorzugsweise wird im Rahmen der weiteren Messung mit einem passiven Magnetfeldsensor ein durch den Schwebemagneten hervorgerufener magnetische Gesamtfluss oder ein Anteil davon unter Bildung eines Magnetflussmesswertes gemessen und anhand des Magnetflussmesswertes und des Magnetstromwertes auf einen zweiten Spaltwert geschlossen. Unter einem passiven Magnetfeldsensor ist ein Sensor zu verstehen, der kein eigenes Magnetfeld erzeugt und nur ein vorhandenes Magnetfeld misst.

Als Anteil des Gesamtflusses kann beispielsweise der magnetische Streufluss oder der das Schweben hervorrufende magnetische Nutzfluss gemessen werden.

Vorzugsweise wird der zweite Spaltwert gewonnen, indem ein vorab ermitteltes zweites Kennlinienfeld herangezogen wird, in dem Spaltwerte für verschiedene Magnetflussmesswerte und Magnetstromwerte bzw. entsprechende Messwertpaare eingetragen sind. Das zweite Kennlinienfeld wird vorzugsweise anhand von vorab durchgeführten Messungen an dem Schwebemagneten und der Reaktionsschiene für verschiedene Spaltgrößen oder anhand von Messungen an baugleichen Schwebemagneten und baugleichen Reaktionsschienen oder anhand einer Simulation des magnetischen Systems aus Schwebemagneten, Reaktionsschiene und Spalt erstellt.

Im Falle, dass das erste Kennlinienfeld zwei mögliche unterschiedliche Spaltwerte liefert, wird bevorzugt derjenige Spaltwert des ersten Kennlinienfeldes als Spaltmesswert verwendet, der dichter an dem zweiten Spaltwert liegt.

Alternativ kann im Falle, dass das erste Kennlinienfeld zwei mögliche unterschiedliche Spaltwerte liefert, derjenige Spaltwert des ersten Kennlinienfeldes, der dichter an dem zweiten Spaltwert liegt, mit dem zweiten Spaltwert unter Bildung des endgültigen Spaltmesswertes gemittelt werden.

Gemäß einer zweiten besonders vorteilhaften Variante des Verfahrens ist vorgesehen, dass mit einem passiven Magnetfeldsensor ein durch den Magnetstrom hervorgerufener magnetischer Magnetfluss unter Bildung eines Magnetflussmesswertes gemessen wird und anhand des Magnetflussmesswertes und des Magnetstromwertes der Spaltmesswert gebildet wird.

Beispielsweise kann als Magnetfluss der Gesamtmagnetfluss, der magnetische Streufluss oder der das Schweben hervorgerufene magnetische Nutzfluss gemessen werden.

Vorzugsweise wird der Spaltmesswert gewonnen, indem ein vorab ermitteltes Kennlinienfeld herangezogen wird, in dem Spaltwerte für verschiedene Magnetflussmesswerte und Magnetstromwerte bzw. für entsprechende Messwertpaare eingetragen sind.

Ein solches Kennlinienfeld wird vorzugsweise anhand von vorab durchgeführten Messungen an dem Schwebemagneten und der Reaktionsschiene für verschiedene Spaltgrößen oder anhand von Messungen an baugleichen Schwebemagneten und baugleichen Reaktionsschienen oder anhand einer Simulation des magnetischen Systems aus Schwebemagneten, Reaktionsschiene und Spalt erstellt.

Gemäß einer dritten besonders vorteilhaften Variante des Verfahrens ist vorgesehen, dass mit einem ersten passiven Magnetfeldsensor ein durch den Schwebemagneten hervorgerufener erster Magnetfluss unter Bildung eines ersten Magnetflusswertes und mit einem zweiten passiven Magnetfeldsensor ein durch den Schwebemagneten hervorgerufener zweiter, sich von dem ersten Magnetfluss unterscheidender zweiter Magnetfluss unter Bildung eines zweiten Magnetflusswertes gemessen wird und dass der Spaltmesswert gewonnen wird, indem ein vorab ermitteltes Kennlinienfeld herangezogen wird, in dem Spaltwerte für verschiedene erste und zweite Magnetflüsse bzw. für entsprechende Messwertpaare eingetragen sind.

Beispielsweise wird der erste Magnetfluss durch den Gesamtfluss gebildet, der von dem Schwebemagneten hervorgerufen wird, und der zweite Magnetfluss wird durch den Nutzfluss oder den Streufluss gebildet, der von dem Schwebemagneten hervorgerufen wird.

Alternativ kann der erste Magnetfluss durch den Nutzfluss gebildet werden, der von dem Schwebemagneten hervorgerufen wird, und der zweite Magnetfluss kann durch den Streufluss gebildet werden, der von dem Schwebemagneten hervorgerufen wird.

Das Kennlinienfeld wird vorzugsweise anhand von vorab durchgeführten Messungen an dem Schwebemagneten und der Reaktionsschiene für verschiedene Spaltgrößen oder anhand von Messungen an baugleichen Schwebemagneten und baugleichen Reaktionsschienen oder anhand einer Simulation des magnetischen Systems aus Schwebemagneten, Reaktionsschiene und Spalt erstellt.

Die Erfindung bezieht sich außerdem auf eine Anordnung zum Messen des Spalts zwischen einem Schwebemagneten eines Fahrzeugs einer Magnetschwebebahn und einer ortsfesten Reaktionsschiene der Magnetschwebebahn und zum Erzeugen eines die Größe des Spalts angebenden Spaltmesswertes.

Der Erfindung liegt diesbezüglich die Aufgabe zugrunde, eine Anordnung zum Spaltmessen anzugeben, die sich mit besonders wenig Aufwand herstellen lässt.

Diese Aufgabe wird erfindungsgemäß durch die Anordnung nach Anspruch 11 gelöst. Die Anordnung weist eine Auswerteinrichtung auf, die zum Ermitteln des Spaltmesswerts das vom Schwebemagneten erzeugte Magnetfeld oder zumindest eine damit zusammenhängende Messgröße berücksichtigt.

Bezüglich der Vorteile der erfindungsgemäßen Anordnung sei auf die obigen Ausführungen im Zusammenhang mit dem erfindungsgemäßen Verfahren verwiesen, da sich die Vorteile des Verfahrens und die der Anordnung im Wesentlichen entsprechen.

Vorzugsweise erfolgt das Ermitteln des Spaltmesswerts ausschließlich unter Berücksichtigung des vom Schwebemagneten erzeugten Magnetfelds.

Erfindungsgemäß weist die Auswerteinrichtung auf:

- eine Signalquelle zum Erzeugen einer elektrischen Modulationsspannung zum Modulieren der an dem Schwebemagneten anliegenden Magnetspannung,
- eine mit dem Schwebemagneten in Verbindung stehende Messeinrichtung zum Messen des durch die modulierte Magnetspannung hervorgerufenen Magnetstromes,

- eine mit der Messeinrichtung in Verbindung stehende Messwertbildungseinrichtung, die unter Berücksichtigung der zeitlichen Änderung des Magnetstroms aufgrund der Modulation der Magnetspannung ein die Induktivität des magnetischen Systems aus Schwebemagnet, Reaktionsschiene und Spalt angebenden Induktivitätswert ermittelt und mit dem Induktivitätswert und dem Magnetstromwert den Spaltmesswert bildet.

Die Messwertbildungseinrichtung kann beispielsweise durch eine Recheneinrichtung gebildet und zum Beispiel in einer Steuereinrichtung enthalten sein.

Vorzugsweise umfasst die Messwertbildungseinrichtung eine Speichereinrichtung oder ist mit einer solchen verbunden, in der ein vorab ermitteltes Kennlinienfeld abgelegt ist, in dem Spaltwerte für verschiedene Induktivitäten und Magnetstromwerte eingetragen sind.

Gemäß einer zweiten besonders bevorzugten Ausgestaltung der Anordnung weist die Auswerteinrichtung auf:

- eine Messeinrichtung zum Messen des den Schwebemagneten durchfließenden Magnetstromes,
- einen passiven Magnetfeldsensor zum Messen des durch den Magnetstrom hervorgerufenen magnetischen Magnetflusses unter Bildung eines Magnetflussmesswertes und
- eine Messwertbildungseinrichtung, die mit dem Magnetflussmesswert des Magnetfeldsensors und dem Magnetstromwert der Messeinrichtung den Spaltmesswert bildet.

Vorzugsweise umfasst die Messwertbildungseinrichtung gemäß der zweiten Ausgestaltung eine Speichereinrichtung oder ist mit einer solchen verbunden, in der ein vorab ermitteltes Kennlinienfeld abgelegt ist, in dem Spaltwerte für verschiedene Magnetflussmesswerte und Magnetstromwerte eingetragen sind.

Gemäß einer dritten besonders bevorzugten Ausgestaltung der Anordnung weist die Auswerteinrichtung auf:

- einen ersten passiven Magnetfeldsensor zum Messen eines durch den Schwebemagneten hervorgerufenen ersten Magnetflusses und zum Bilden eines ersten Magnetflussmesswertes,
- einen zweiten passiven Magnetfeldsensor zum Messen eines durch den Schwebemagneten hervorgerufenen zweiten, sich vom ersten Magnetfluss unterscheidenden Magnetflusses und zum Bilden eines zweiten Magnetflussmesswertes und
- eine Messwertbildungseinrichtung, die mit dem ersten und dem zweiten Magnetflussmesswert den Spaltmesswert bildet.

Vorzugsweise umfasst die Messwertbildungseinrichtung gemäß der dritten Ausgestaltung eine Speichereinrichtung oder ist mit einer solchen verbunden, in der ein vorab ermitteltes Kennlinienfeld abgelegt ist, in dem Spaltwerte für verschiedene erste und zweite Magnetflussmesswerte eingetragen sind.

Der Schwebemagnet, dessen Magnetfeld zur Spaltbestimmung herangezogen wird, kann durch einen oder mehrere Einzelpole eines Tragmagneten oder durch die Gesamtheit aller Einzelpole des Tragmagneten gebildet sein.

Unabhängig von der konkreten Ausgestaltung der Auswerteinrichtung, sei es gemäß der ersten, der zweiten, der dritten oder einer anderen Variante, wird es im Hinblick auf eine minimale Anzahl an Komponenten als vorteilhaft angesehen, wenn die Auswerteinrichtung einen integralen Bestandteil des Schwebemagneten bildet.

Wie sich den obigen Ausführungen entnehmen lässt, werden mehrere Messvarianten zur Bildung des Spaltmesswertes als bevorzugt angesehen. Sehr genaue Messergebnisse werden sich einfach und damit vorteilhaft bilden lassen, wenn mit zwei oder mehr Messvarianten jeweils Einzelspaltmesswerte gebildet werden und die resultierenden Einzelspaltmesswerte unter Bildung eines endgültigen Spaltmesswertes gemittelt werden. Bei der Mittelwertbildung können die Einzelspaltmesswerte gleichgewichtet berücksichtigt werden; alternativ ist es auch möglich, für jede herangezogene Messvariante zunächst vorzugsweise quantitativ die jeweilige Messgenauigkeit zu bestimmen und anschließend die Mittlung der Einzelspaltmesswerte unter Berücksichtigung der jeweiligen Messgenauigkeit durchzuführen. Vorzugsweise haben Varianten mit hoher Messgenauigkeit eine größere Gewichtung als Varianten mit geringer Messgenauigkeit.

Die Erfindung wird nachfolgend anhand von Ausführungsbeispielen näher erläutert; dabei zeigen beispielhaft:

Figur 1      eine schematische Prinzipdarstellung für ein magnetisches Tragesystem für eine Magnetschwebebahn,

Figur 2      ein erstes Ausführungsbeispiel für eine Anordnung zum Messen des Spalts, bei der die Induktivität des Tragesystems ermittelt und berücksichtigt wird,

Figur 3      beispielhaft Strom- und Spannungsverläufe, anhand derer die Induktivität des Tragesystems ermittelt wird,

Figur 4      beispielhaft ein Kennlinienfeld, aus dem sich Spaltwerte in Abhängigkeit von der Induktivität des Tragesystems und des Magnetstroms des Schwebemagneten auslesen lassen,

Figur 5      ein zweites Ausführungsbeispiel für eine Anordnung zum Messen des Spalts, bei der die Induktivität des Tragesystems sowie ein magnetischer Fluss des Schwebemagneten und der Magnetstrom des Schwebemagneten berücksichtigt werden,

Figur 6     ein drittes Ausführungsbeispiel für eine Anordnung zum Messen des Spalts, bei der zwei magnetische Flüsse des Schwebemagneten, der Magnetstrom des Schwebemagneten und die Induktivität des Tragesystems berücksichtigt werden,

Figur 7     ein viertes Ausführungsbeispiel für eine Anordnung zum Messen des Spalts, bei der zwei magnetische Flüsse des Schwebemagneten sowie der Magnetstrom des Schwebemagneten berücksichtigt werden,

Figur 8     ein fünftes Ausführungsbeispiel für eine Anordnung zum Messen des Spalts, bei der ein magnetischer Fluss des Schwebemagneten und der Magnetstrom des Schwebemagneten berücksichtigt werden,

Figur 9     ein sechstes Ausführungsbeispiel für eine Anordnung zum Messen des Spalts, bei der zwei magnetische Flüsse des Schwebemagneten berücksichtigt werden, und

Figur 10    ein siebentes Ausführungsbeispiel für eine Anordnung zum Messen des Spalts, bei der die Messung an einem Einzelpol eines Tragmagneten durchgeführt wird.

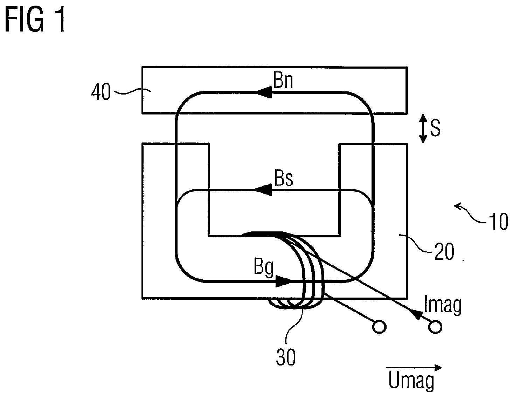

In den Figuren 1 bis 10 werden für identische oder vergleichbare Komponenten der Übersicht halber dieselben Bezugszeichen verwendet.

In der Figur 1 ist beispielhaft ein magnetisches Tragesystem 10 mit einem Schwebemagneten 20 gezeigt. Der Schwebemagnet 20 ist mit einer um den Schwebemagneten 20 herumgewickelten Erregerwicklung 30 ausgestattet. Der Schwebemagnet 20 gehört zu einem in der Figur 1 nicht weiter dargestelltem Schienenfahrzeug einer Magnetschwebebahn.

Durch einen Spalt S von dem Schwebemagneten 20 getrennt befindet sich eine ortsfeste Reaktionsschiene 40, die zu einer nicht weiter dargestellten streckenseitigen Einrichtung der Magnetschwebebahn gehört.

Wird die Erregerwicklung 30 von einem elektrischen Strom, nachfolgend Magnetstrom Imag genannt, durchflossen, so wird ein magnetischer Fluss erzeugt. Der von der Erregerwicklung 30 erzeugte Gesamtfluss Bg führt zu einem Nutzfluss Bn, der den Spalt S durchsetzt und die Reaktionsschiene 40 durchfließt, sowie einem Streufluss Bs, der für das Tragesystem keine Funktion aufweist und sozusagen verloren geht: Es gilt also:

$$Bg = Bs + Bn.$$

Um den Spalt S bzw. den Abstand S zwischen der Reaktionsschiene 40 und dem Schwebemagneten 20 zu messen, sind verschiedene Messvarianten einsetzbar, die das vom Schwebemagneten erzeugte Magnetfeld zum Ermitteln des Spaltmesswerts berücksichtigen.

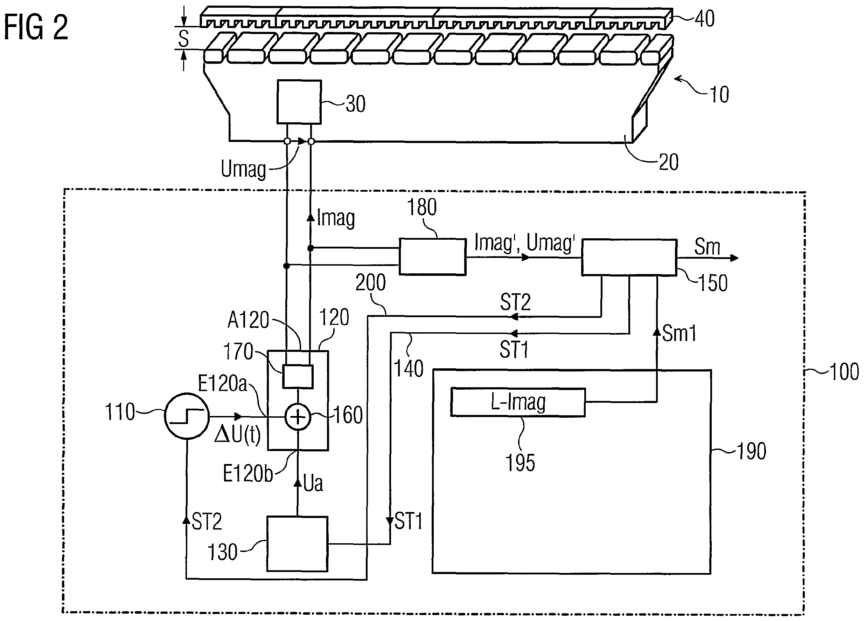

In der Figur 2 ist ein erstes Ausführungsbeispiel für eine Anordnung zum Messen des Spalts S gezeigt, bei der die Induktivität L des Tragesystems 10 ermittelt und berücksichtigt wird. Es ist zu sehen, dass der Schwebemagnet 20 durch die Gesamtheit einer Vielzahl an Einzelpolen eines Tragmagneten gebildet sein kann. Alternativ ist es auch möglich, das nachfolgend beschriebene Messverfahren anhand eines Einzelpoles durchzuführen: In diesem Falle würde der Schwebemagnet, der zur Messung herangezogen wird, also durch einen solchen Einzelpol gebildet sein.

Man erkennt in der Figur 2 eine Auswerteinrichtung 100, die mit dem Schwebemagneten 20 in Verbindung steht. Die Auswerteinrichtung 100 ist mit einer Signalquelle 110 ausgestattet, der ausgangsseitig ein Eingang E120a einer Einkoppeleinrichtung 120 nachgeordnet ist. Einem weiteren Eingang E120b der Einkoppeleinrichtung 120 ist eine Ansteuerspannungsquelle 130 vorgeordnet, die eine Spannung Ua zum Erzeugen eines vorgegebenen Spalts S zwischen der Reaktionsschiene 40 und dem Schwebemagneten 20 hervorruft. Zur Steuerung der Ansteuerspannungsquelle 130 steht diese über eine Steuerleitung 140 mit einer Steuereinrichtung 150 in Verbindung, die mit einer nicht weiter dargestellten Recheneinrichtung ausgestattet ist.

Die Einkoppeleinrichtung 120 weist ein Addierglied 160 auf, das eingangsseitig mit den beiden Eingängen E120a und E120b der Einkoppeleinrichtung 120 und ausgangsseitig mit einem Verstärker 170 verbunden ist. Der Ausgang des Verstärkers 170 kann beispielsweise den Ausgang A120 der Einkoppeleinrichtung 120 bilden.

Mit dem Ausgang A120 der Einkoppeleinrichtung 120 ist die Erregerwicklung 30 des Schwebemagneten 20 verbunden; die Erregerwicklung 30 ist aus Gründen der Übersicht hier nur schematisch als Block dargestellt.

Mit der Erregerwicklung 30 steht eine Messeinrichtung 180 in Verbindung, die die von der Einkoppeleinrichtung 120 abgegebene Magnetspannung Umag, die an dem Schwebemagneten 20 anliegt, und den Magnetstrom Imag, der den Schwebemagneten 20 durchfließt, misst und entsprechende Magnetstromwerte Imag' und Magnetspannungswerte Umag' erzeugt.

Der Messeinrichtung 180 ausgangsseitig nachgeordnet ist die Steuereinrichtung 150, die die Messwerte Imag' und Umag' auswertet und ausgangsseitig einen die Größe des Spalt S kennzeichnenden Spaltmesswert Sm erzeugt.

Mit der Steuereinrichtung 150 steht eine Speichereinrichtung 190 in Verbindung, in der zur Bildung des Spaltmesswertes Sm ein Kennlinienfeld in Form eines L-Imag-Kennlinienfeldes 195 hinterlegt ist.

Die Anordnung gemäß der Figur 2 wird beispielsweise wie folgt betrieben:

Die Steuereinrichtung 150 steuert die Ansteuerspannungsquelle 130 derart an, dass diese eine Ausgangsspannung Ua erzeugt. Durch die Ausgangsspannung Ua wird in dem Schwebemagneten 20 ein magnetischer Nutzfluss Bn (vgl. Figur 1) erzeugt, der zu einem Spalt S zwischen der Reaktionsschiene 40 und dem Schwebemagneten 20 führt. Die Ansteuerung erfolgt mittels eines Steuersignals ST1 über die Steuerleitung 140.

Über eine weitere Steuerleitung 200 erzeugt die Steuereinrichtung 150 ein weiteres Steuersignal ST2, das zur Signalquelle 110 gelangt, die daraufhin ein Rechtecksignal ΔU(t) mit einer vorgegebenen Periodendauer T und einer Amplitude ΔUm erzeugt. Die Amplitude ΔUm des Rechtecksignals ΔU(t) ist vorzugsweise betragsmäßig kleiner als die Ausgangsspannung Ua der Ansteuerspannungsquelle 130; denn das Rechtecksignal ΔU(t) dient nur zum Messen und nicht zum "Tragen" bzw. Hervorrufen des Spalts S. Am Ausgang A120 der Einkoppeleinrichtung 120 bildet sich somit eine Magnetspannung Umag(t) für den Schwebemagneten 20 gemäß

$$Umag(t) = Ua + \Delta U(t)$$

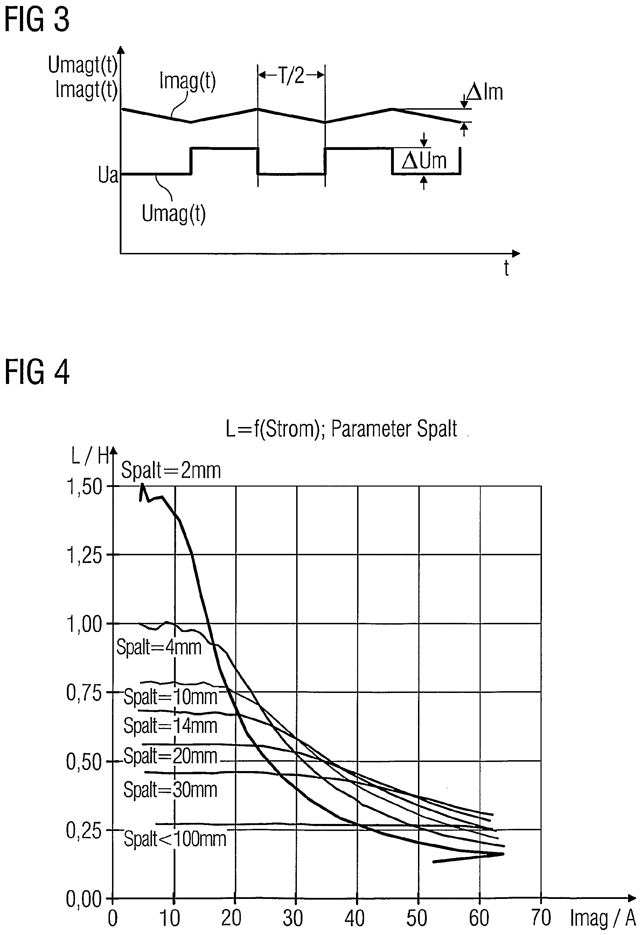

Der entsprechende zeitliche Verlauf der Magnetspannung Umag ist in der Figur 3 dargestellt.

Aufgrund der Induktivität L des magnetischen Tragesystems 10 bestehend aus dem Schwebemagneten 20, dem Spalt S und der Reaktionsschiene 40 kommt es zu einem Magnetstromverlauf I-mag(t) gemäß

$$Umag(t) = L * dImag(t)/dt$$

Der Stromverlauf ist ebenfalls in der Figur 3 gezeigt.

Die Induktivität L des Tragesystems 10 kann nun relativ einfach errechnet werden, indem man den Stromverlauf Imag auswertet, gemäß:

$$L = (\Delta Um * \Delta t) / \Delta Im$$

$$L = (\Delta Um * T/2) / \Delta Im$$

wobei ΔUm die Änderung der Magnetspannung, ΔIm die Änderung des Magnetstroms und Δt die für die Änderung des Magnetstroms erforderliche Zeitspanne bezeichnen.

Die Induktivität L ist eine für den Spalt S charakteristische Größe, weil der magnetische Gesamtfluss Bg von dem Spalt S abhängt; demgemäß kann der Spalt S über eine Auswertung der Induktivität L ermittelt werden.

In der Figur 4 ist beispielhaft das L-Imag-Kennlinienfeld 195 dargestellt, das zur Bestimmung des Spalts S in Abhängigkeit von der Induktivität L und dem Magnetstrom Imag geeignet ist. Man erkennt eine Vielzahl an Kennlinien für unterschiedliche Spaltwerte.

Es lässt sich erkennen, dass bei dem Beispiel gemäß der Figur 4 für Magnetströme Imag unterhalb von ca. 17 A eine eineindeutige Zuordnung eines Spaltwerts S in Abhängigkeit von dem jeweiligen Magnetstrom Imag und der jeweiligen Induktivität L möglich ist und demgemäß der Spalt S anhand der Messwerte für den Magnetstrom Imag und der Induktivität L ermittelt werden kann. Wird beispielsweise ein Magnetstrom Imag = 10 A und eine Induktivität von L = 0,8 H gemessen, so beträgt der Spalt S ca. 10 mm. Falls bei diesem Strom Imag = 10 A eine Induktivität von L = 0,4 H gemessen wird, beträgt der Spalt ca. 30 mm.

Die Steuereinrichtung 150 ist also in der Lage, aus dem L-Imag-Kennlinienfeld 195 einen Spaltwert Sm1 in Abhängigkeit von der Induktivität L und dem Magnetstrom Imag auszulesen und diesen als Spaltmesswert Sm ausgangsseitig auszugeben.

Bei dem L-Imag-Kennlinienfeld 195 gemäß der Figur 4 wird beispielhaft davon ausgegangen, dass für Magnetströme oberhalb von ca. 17 A Sättigungserscheinungen im Magneteisen des Schwebemagneten 20 und/oder im Magneteisen der Reaktionsschiene 40 auftreten und dass demgemäß die Funktion L = f(Imag, S) nicht mehr eineindeutig ist. Beispielsweise kann der Spalt bei einem Magnetstrom von 17 A und einer Induktivität L von ca. 0,9 H sowohl 2 mm als auch 4 mm betragen, weil sich die Kurven für einen Spalt von 2 mm und für einen Spalt von 4 mm an dieser Stelle bzw. für dieses Messwertepaar (17A; 0,9H) schneiden.

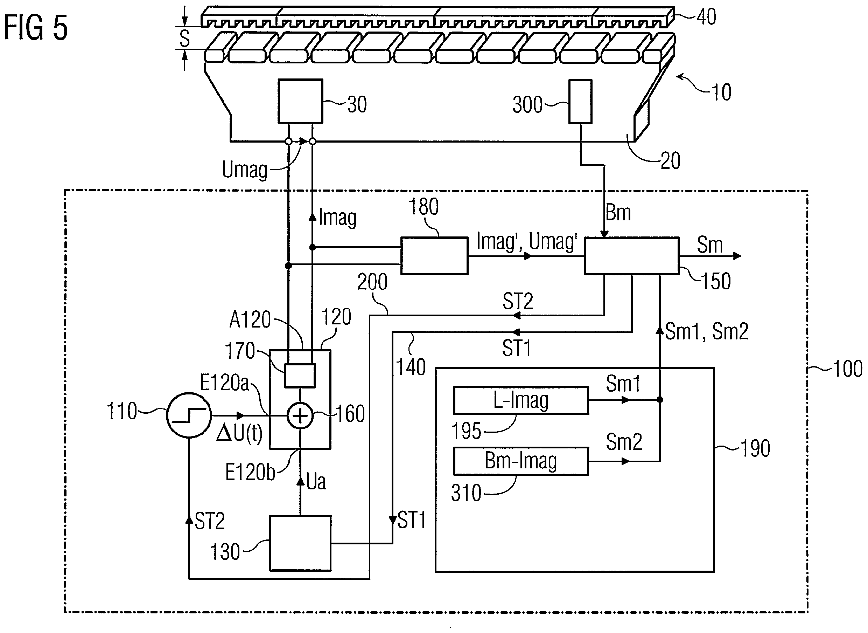

Um auch bei großen Magnetströmen Imag über 17 A eine eindeutige bzw. zuverlässige Spaltmessung zu ermöglichen, wird gemäß einem zweiten Ausführungsbeispiel zusätzlich zu der erläuterten Spaltmessung anhand der Induktivität L noch eine weitere Messung durchgeführt, die einen zweiten Spaltwert Sm2 liefert. Die Figur 5 zeigt beispielhaft eine entsprechende Anordnung. Man erkennt, dass an die Steuereinrichtung 150 ein aktiver oder vorzugsweise passiver Magnetfeldsensor 300 (beispielsweise eine Hallsonde oder ein magnetoresistiver Sensor) angeschlossen ist, der einen Magnetfluss - nämlich den Nutzfluss Bn, den Gesamtfluss Bg oder den Streufluss Bs des Schwebemagneten 20 - unter Bildung eines Magnetflussmesswertes Bm misst.

In der Speichereinrichtung 190 ist in diesem Fall zusätzlich ein zweites Kennlinienfeld in Form eines Bm-Imag-Kennlinienfeldes 310 abgespeichert, in dem Spaltwerte für verschiedene Magnetflussmesswerte Bm und die zugehörigen Magnetstromwerte Imag spaltabhängig eingetragen sind.

Die Steuereinrichtung 150 wertet somit den Magnetflussmesswert Bm des Magnetfeldsensors 300 und den Magnetstrom Imag unter Heranziehung des Bm-Imag-Kennlinienfeldes 310 aus und liest einen zweiten Spaltwert Sm2 aus dem Bm-Imag-Kennlinienfeld 310 aus.

Dieser zweite Spaltwert Sm2 wird mit den möglichen Spaltwerten Sm1 des L-Imag-Kennlinienfeldes 195 verglichen, und es wird derjenige Spaltwert Sm1 des L-Imag-Kennlinienfeldes 195 als Spaltmesswert Sm ausgegeben, der mit dem zweiten Spaltwert Sm2 am besten übereinstimmt. Alternativ können der zweite Spaltwert Sm2 und der damit am besten übereinstimmende erste Spaltwert Sm1 auch gemittelt werden gemäß:

$$Sm = (Sm1 + Sm2) / 2$$

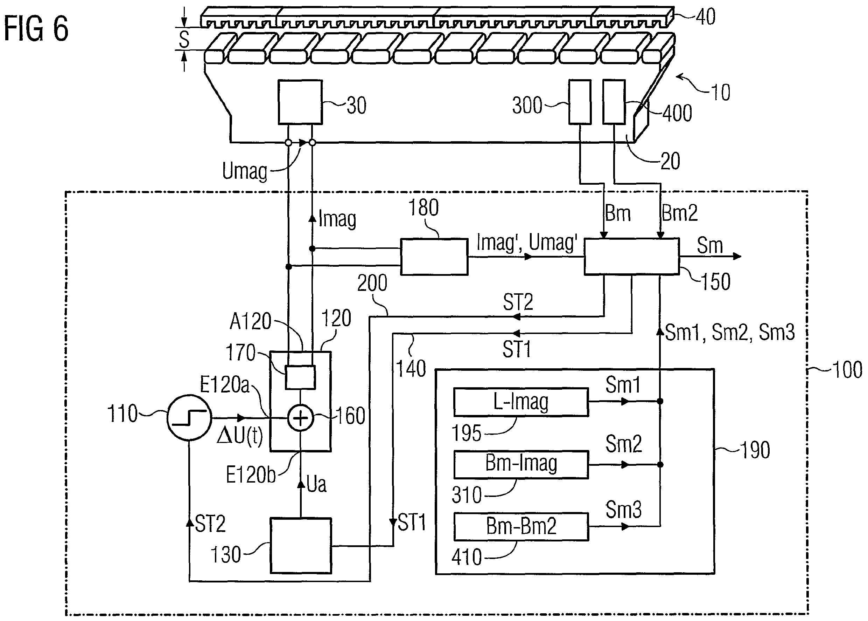

Um die Messgenauigkeit noch weiter zu erhöhen, kann auch ein weiterer aktiver oder passiver Magnetfeldsensor vorhanden sein, wie im Zusammenhang mit der Figur 6 erläutert werden soll.

Bei diesem dritten Ausführungsbeispiel ist an die Steuereinrichtung 150 neben dem ersten aktiven oder - vorzugsweise - passiven Magnetfeldsensor 300 (z. B. Hallelement) ein zweiter aktiver oder - vorzugsweise - passiver Magnetfeldsensor 400 (z. B. Hallelement) angeschlossen, der einen zweiten Magnetfluss, und zwar einen anderen Magnetfluss als der erste Magnetfeldsensor 300, misst. Je nachdem, welche Art Magnetfluss der erste Magnetfeldsensor 300 misst, wird der zweite Magnetfeldsensor 400 den Nutzfluss Bn, den Gesamtfluss Bg oder den Streufluss Bs, unter Bildung eines zweiten Magnetflussmesswertes Bm2 messen.

In der Speichereinrichtung 190 ist in diesem Fall zusätzlich ein drittes Kennlinienfeld in Form eines Bm-Bm2-Kennlinienfeldes 410 abgespeichert, in dem Spaltwerte Sm3 für verschiedene Magnetflussmesswertpaare Bm und Bm2 spaltabhängig eingetragen sind.

Die Steuereinrichtung 150 wertet somit außerdem den zweiten Magnetflussmesswert Bm2 des zweiten Magnetfeldsensors 400 unter Heranziehung des Bm-Bm2-Kennlinienfeldes aus und liest aus diesem einen dritten Spaltwert Sm3 aus.

Dieser dritte Spaltwert Sm3 kann mit den anderen Spaltwerten Sm1 und Sm2 gemittelt werden. Vorzugsweise werden hierzu der zweite Spaltwert Sm2 und/oder der dritte Spaltwert Sm3 mit den möglichen Spaltwerten Sm1 des L-Imag-Kennlinienfeldes 195 verglichen, und es wird derjenige Spaltwert Sm1 des L-Imag-Kennlinienfeldes, der mit den beiden Spaltwerten Sm2 bzw. Sm3 am besten übereinstimmt, mit diesen beiden Spaltwerten Sm2 bzw. Sm3 gemittelt gemäß:

$$Sm = (Sm1 + Sm2 + Sm3) / 3$$

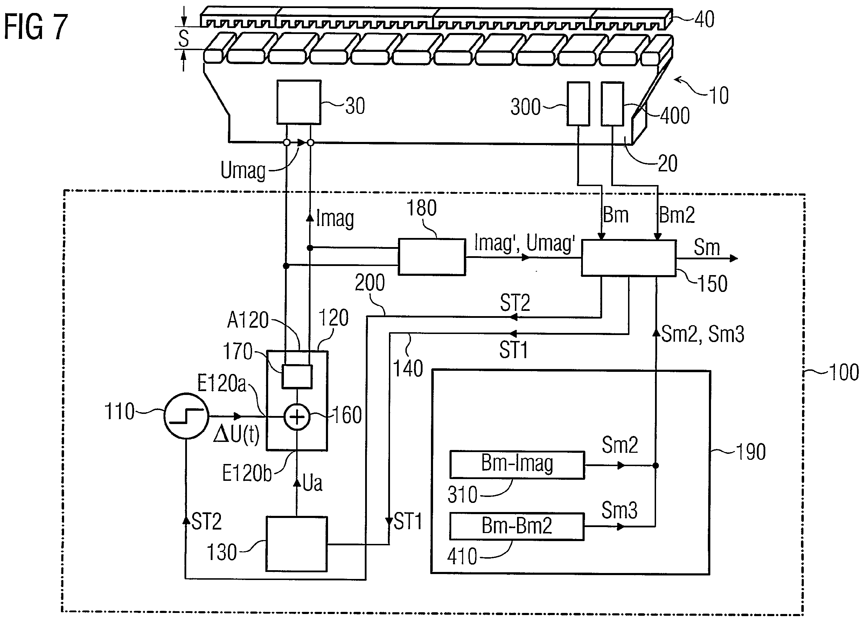

Die Figur 7 zeigt ein viertes Ausführungsbeispiel für eine Auswerteinrichtung 100. Bei diesem Ausführungsbeispiel ermittelt die Steuereinrichtung 150 den Spaltmesswert Sm ausschließlich anhand eines Bm-Imag-Kennlinienfeldes 310 und eines Bm-Bm2-Kennlinienfeldes 410, indem sie in Abhängigkeit von dem Magnetstrom Imag und dem Magnetflusswert Bm aus dem Bm-Imag-Kennlinienfeld 310 einen Spaltwert Sm2 und in Abhängigkeit von den Magnetflusswerten Bm und Bm2 aus dem Bm-Bm2-Kennlinienfeld 410 einen Spaltwert Sm3 ausliest. Anschließend mittelt sie die beiden Spaltwerte Sm2 und Sm3 unter Bildung des Spaltmesswertes Sm gemäß:

$$Sm = (Sm2 + Sm3) / 2$$

Bei den beiden Magnetfeldsensoren 300 und 400 handelt es sich vorzugsweise um passive Sensoren (z. B. Hallelemente).

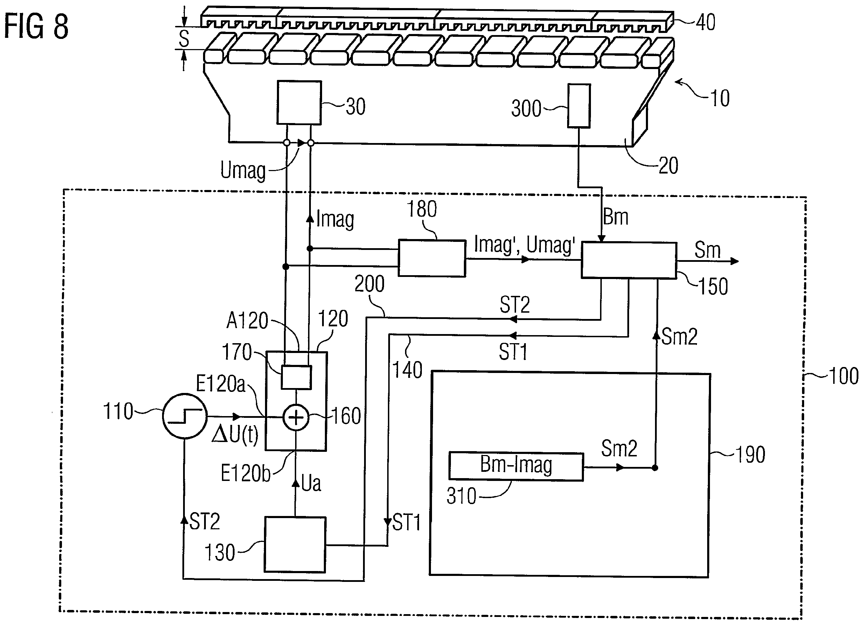

Die Figur 8 zeigt ein fünftes Ausführungsbeispiel für eine Auswerteinrichtung 100. Bei diesem Ausführungsbeispiel ermittelt die Steuereinrichtung 150 den Spaltmesswert Sm allein anhand eines Bm-Imag-Kennlinienfeldes 310, indem sie in Abhängigkeit von dem Magnetstrom Imag und dem Magnetflusswert Bm aus dem Bm-Imag-Kennlinienfeld 310 einen Spaltwert Sm2 ausliest und diesen als Spaltmesswert Sm ausgibt. Bei dem Magnetfeldsensor 300 handelt es sich vorzugsweise um einen passiven Sensor (z. B. Hallelement).

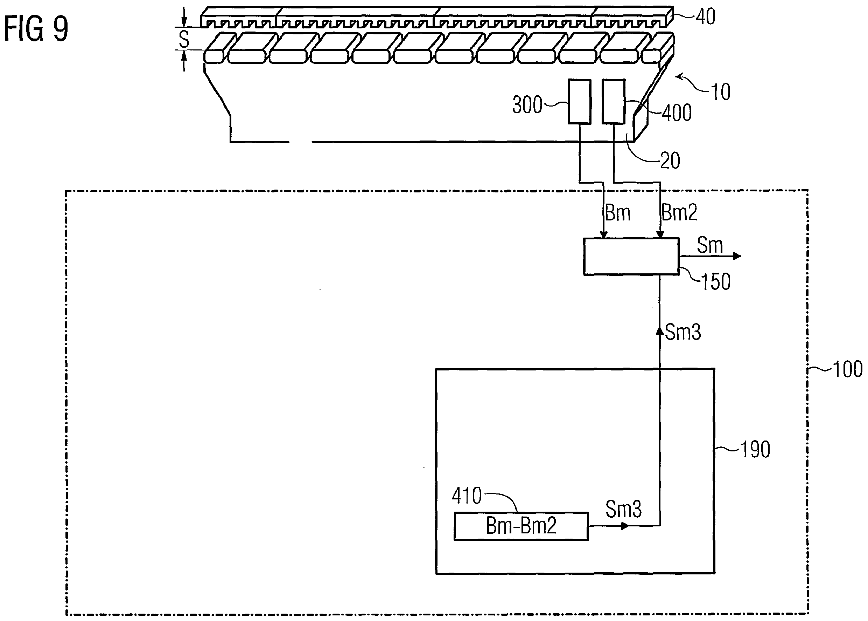

Die Figur 9 zeigt ein sechstes Ausführungsbeispiel für eine Auswerteinrichtung 100. Bei diesem Ausführungsbeispiel ermittelt die Steuereinrichtung 150 den Spaltmesswert Sm allein anhand eines Bm-Bm2-Kennlinienfeldes 410, indem sie in Abhängigkeit von den Magnetflusswerten Bm und Bm2 zweier vorzugsweise passiver Magnetfeldsensoren 300 und 400 (z. B. Hallelemente) aus dem Bm-Bm2-Kennlinienfeld 410 einen Spaltwert S3 ausliest und diesen als Spaltmesswert Sm ausgibt.

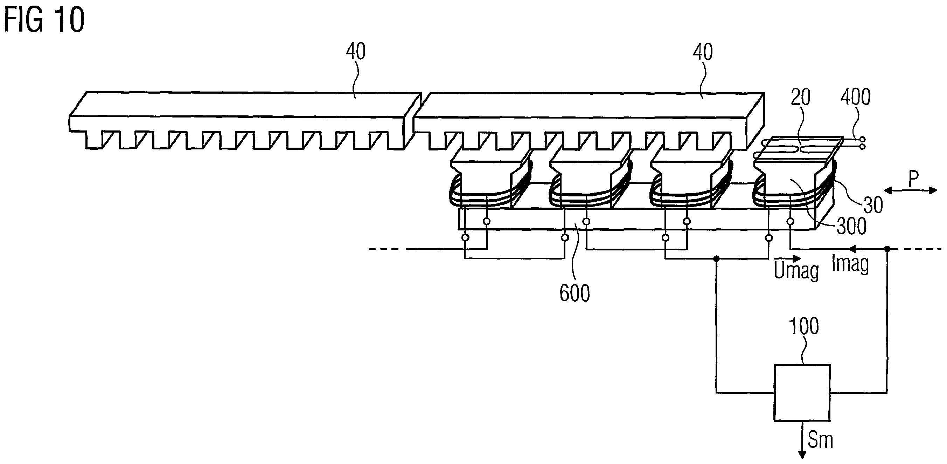

In der Figur 10 ist ein siebentes Ausführungsbeispiel für eine Anordnung zum Messen des Spalts S gezeigt. Bei diesem Beispiel wird der Schwebemagnet 20 durch einen Einzelpol eines Tragmagneten 600 gebildet. Die Auswerteinrichtung 100 misst den Magnetstrom Imag und die Magnetspannung Umag an dem Einzelpol und ermittelt mit einem Magnetflussmesswert eines passiven Magnetsensors 300 und/oder eines durch eine Messspule gebildeten aktiven Magnetsensors 400 den Spaltmesswert Sm. Ein Pfeil P deutet die Fahrtrichtung der Magnetschwebebahn an.

Bei dem Beispiel gemäß der Figur 10 kann für jeden Einzelpol des Tragmagneten 600 und damit redundant der jeweilige Spalt bestimmt werden. Da die Breite der Polschuhe des Tragmagneten 600 - in Fahrtrichtung gesehen - größer ist als die der Pollücken, kann mit der beschriebenen, auf dem Magnetstrom Imag und der Magnetspannung Umag beruhenden Meßmethode der sich aus der Nutung der Reaktionsschiene 40 ergebende Ripple des Messsignals leicht unterdrückt werden, da - im Vergleich zu einer Messung im Bereich der Pollücken - eine relativ große ungestörte Integrationslänge möglich ist.

Bezugszeichenliste

| | |
|---|---|
| 10 | magnetisches Tragesystem |
| 20 | Schwebemagnet |
| 30 | Erregerwicklung |
| 40 | Reaktionsschiene |
| 100 | Auswerteinrichtung |
| 110 | Signalquelle |
| 120 | Einkoppeleinrichtung |
| 130 | Ansteuerspannungsquelle |
| 140 | Steuerleitung |
| 150 | Steuereinrichtung |
| 160 | Addierglied |
| 170 | Verstärker |
| 180 | Messeinrichtung |
| 190 | Speichereinrichtung |
| 195 | L-Imag-Kennlinienfeld |
| 200 | weitere Steuerleitung |
| 300 | Magnetfeldsensor |
| 310 | Bm-Imag-Kennlinienfeld |
| 400 | Magnetfeldsensor |
| 410 | Bm-Bm2-Kennlinienfeld |
| 600 | Tragmagnet |
| Sm1 | Spaltwert |
| Sm2 | Spaltwert |
| Sm3 | Spaltwert |
| Sm | Spaltmesswert |
| Imag | Magnetstrom |
| Imag' | Magnetstrommesswert |
| Umag | Magnetspannung |
| Umag' | Magnetspannungsmesswert |
| Ua | Ausgangsspannung |
| Bg | Gesamtfluss |
| Bn | Nutzfluss |
| Bs | Streufluss |
| S | Spalt |
| L | Induktivität |
| ST1 | Steuersignal |
| ST2 | weiteres Steuersignal |
| T | Periodendauer |
| ΔUm | Amplitude |
| ΔU(t) | Rechtecksignal |
| P | Fahrtrichtung |

**Patentansprüche**

1. Verfahren zum Messen des Spalts (S) zwischen einem Schwebemagneten (20) eines Fahrzeugs einer Magnetschwebebahn und einer ortsfesten Reaktionsschiene (40) der Magnetschwebebahn und zum Erzeugen eines die Größe des Spalts angebenden Spaltmesswertes (Sm), wobei zum Bilden des Spaltmesswertes das vom Schwebemagneten (20) erzeugte Magnetfeld (Bn, Bg, Bs) oder zumindest eine damit zusammenhängende Messgröße (L, Bm, Bm2) ausgewertet wird, **dadurch gekennzeichnet, dass**

   - der den Schwebemagneten durchfließende Magnetstrom (Imag) durch Modulation der am Schwebemagneten anliegenden Magnetspannung (Umag) moduliert wird,
   - die Änderung des Magnetstroms (ΔIm) aufgrund der Modulation der Magnetspannung (ΔUm) erfasst wird und ein die Induktivität des magnetischen Systems aus Schwebemagnet, Reaktionsschiene und Spalt angebender Induktivitätswert (L) ermittelt wird,
   - und mit dem Induktivitätswert (L) und dem Magnetstromwert (Imag) der Spaltmesswert gebildet wird.

2. Verfahren nach Anspruch 1, **dadurch gekennzeichnet, dass** der Induktivitätswert unter Berücksichtigung der zeitlichen Änderung des Magnetstromswerts und der Änderung der Magnetspannung errechnet wird.

3. Verfahren nach Anspruch 1 oder 2, **dadurch gekennzeichnet, dass** der Spaltmesswert gewonnen wird, indem ein vorab ermitteltes Kennlinienfeld (195) herangezogen wird, in dem Spaltwerte (Sm1) für verschiedene Induktivitäten (L) und Magnetstromwerte (Imag) eingetragen sind.

4. Verfahren nach einem der vorangehenden Ansprüche 1-3, **dadurch gekennzeichnet, dass** für Magnetstromwerte unterhalb einer vorgegebenen Grenze der in dieser Weise aus dem Kennlinienfeld ausgelesene Spaltwert (Sm1) als Spaltmesswert (Sm) weiter verwendet wird und dass für Magnetstromwerte oberhalb der Grenze eine weitere Messung erfolgt.

**5.** Verfahren nach Anspruch 4,
**dadurch gekennzeichnet, dass**

- im Rahmen der weiteren Messung mit einem passiven Magnetfeldsensor (300) ein durch den Schwebemagneten hervorgerufener magnetischer Gesamtfluss (Bg) oder ein Anteil (Bs, Bn) davon unter Bildung eines Magnetflussmesswertes (Bm) gemessen wird und
- anhand des Magnetflussmesswertes (Bm) und des Magnetstromwertes (Imag) auf einen zweiten Spaltwert (Sm2) geschlossen wird.

**6.** Verfahren nach Anspruch 5,
**dadurch gekennzeichnet, dass**
der zweite Spaltwert (Sm2) gewonnen wird, indem ein vorab ermitteltes zweites Kennlinienfeld (310) herangezogen wird, in dem Spaltwerte (sm2) für verschiedene Magnetflussmesswerte (Bm) und Magnetstromwerte (Imag) eingetragen sind.

**7.** Verfahren nach einem der vorangehenden Ansprüche 5-6,
**dadurch gekennzeichnet, dass**
im Falle, dass das erste Kennlinienfeld zwei mögliche unterschiedliche Spaltwerte liefert, derjenige Spaltwert des ersten Kennlinienfeldes, der dichter an dem zweiten Spaltwert liegt, mit dem zweiten Spaltwert unter Bildung des Spaltmesswertes gemittelt wird.

**8.** Verfahren nach Anspruch 1,
**dadurch gekennzeichnet, dass**

- mit einem passiven Magnetfeldsensor (300) ein durch einen den Schwebemagneten durchfließenden Magnetstrom (Imag) hervorgerufener magnetischer Magnetfluss unter Bildung eines Magnetflussmesswertes (Bm) gemessen wird und
- anhand des Magnetflussmesswertes (Bm) und des Magnetstromwertes (Imag) der Spaltmesswert (Sm2) gebildet wird.

**9.** Verfahren nach Anspruch 8,
**dadurch gekennzeichnet, dass**
der Spaltmesswert gewonnnen wird, indem ein vorab ermitteltes Kennlinienfeld (310) herangezogen wird, in dem Spaltwerte (Sm2) für verschiedene Magnetflussmesswerte (Bm) und Magnetstromwerte (Imag) eingetragen sind.

**10.** Verfahren nach Anspruch 1,
**dadurch gekennzeichnet, dass**

- dass mit einem ersten passiven Magnetfeldsensor (300) ein durch den Schwebemagneten hervorgerufener erster Magnetfluss unter Bildung eines ersten Magnetflusswertes (Bm) und mit einem zweiten passiven Magnetfeldsensor (400) ein durch den Schwebemagneten hervorgerufener zweiter, sich von dem ersten Magnetfluss unterscheidender zweiter Magnetfluss unter Bildung eines zweiten Magnetflusswertes (Bm2) gemessen wird und
- dass der Spaltmesswert gewonnnen wird, indem ein vorab ermitteltes Kennlinienfeld (410) herangezogen wird, in dem Spaltwerte (Sm2) für verschiedene Messwertpaare für den ersten Magnetfluss (Bm) und den zweiten Magnetfluss (Bm2) eingetragen sind.

**11.** Anordnung zum Messen des Spalts (S) zwischen einem Schwebemagneten (20) eines Fahrzeugs einer Magnetschwebebahn und einer ortsfesten Reaktionsschiene (40) der Magnetschwebebahn und zum Erzeugen eines die Größe des Spalts angebenden Spaltmesswertes (Sm), wobei die Anordnung eine Auswerteinrichtung (100) aufweist, die das vom Schwebemagneten (20) erzeugte Magnetfeld (Bg, Bn, Bs) oder zumindest eine damit zusammenhängende Messgröße (L, Bm, Bm2) zum Ermitteln des Spaltmesswerts auswertet,
**dadurch gekennzeichnet, dass**
die Auswerteinrichtung (100) aufweist:

- eine Signalquelle (110) zum Erzeugen einer elektrischen Modulationsspannung ($\Delta$U(t)) zum Modulieren der an dem Schwebemagneten anliegende Magnetspannung (Umag),
- eine mit dem Schwebemagneten in Verbindung stehende Messeinrichtung (180) zum Messen des durch die modulierten Magnetspannung (Umag) hervorgerufenen Magnetstromes (Imag),
- eine mit der Messeinrichtung in Verbindung stehende Messwertbildungseinrichtung (150), die unter Berücksichtigung der zeitlichen Änderung des Magnetstroms ($\Delta$I) aufgrund der Modulation der Magnetspannung ein die Induktivität des magnetischen Systems aus Schwebemagnet, Reaktionsschiene und Spalt angebenden Induktivitätswert (L) ermittelt und mit dem Induktivitätswert und dem Magnetstromwert (Imag) den Spaltmesswert bildet.

**12.** Anordnung nach Anspruch 11,
**dadurch gekennzeichnet, dass**
die Auswerteinrichtung aufweist:

- eine Messeinrichtung (180) zum Messen des den Schwebemagneten (20) durchfließenden Magnetstromes (Imag),
- einen passiven Magnetfeldsensor (300) zum Messen des durch den Magnetstrom hervorgerufenen magnetischen Magnetflusses unter Bildung eines Magnetflussmesswertes (Bm) und
- eine Messwertbildungseinrichtung (150), die mit dem Magnetflussmesswert (Bm) des Magnetfeldsensors und dem Magnetstromwert (Imag') der Messeinrichtung den Spaltmesswert (Sm) bildet.

13. Anordnung nach Anspruch 11,
**dadurch gekennzeichnet, dass**
die Auswerteinrichtung aufweist:

   - einen ersten passiven Magnetfeldsensor (300) zum Messen eines durch den Schwebemagneten (200) hervorgerufenen ersten Magnetflusses und zum Bilden eines ersten Magnetflussmesswertes (Bm),
   - einen zweiten passiven Magnetfeldsensor (400) zum Messen eines durch den Schwebemagneten (200) hervorgerufenen zweiten, sich vom ersten Magnetfluss unterscheidenden Magnetflusses und zum Bilden eines zweiten Magnetflussmesswertes (Bm2) und
   - eine Messwertbildungseinrichtung, die mit dem ersten und dem zweiten Magnetflussmesswert (Bm, Bm2) den Spaltmesswert (Sm) bildet.

14. Anordnung nach einem der voranstehenden Ansprüche 11-13,
**dadurch gekennzeichnet, dass**
die Auswerteinrichtung (100) aufweist:

   - eine Signalquelle (110) zum Erzeugen einer elektrischen Modulationsspannung ($\Delta U(t)$) zum Modulieren der an dem Schwebemagneten anliegende Magnetspannung (Umag),
   - eine mit dem Schwebemagneten in Verbindung stehende Messeinrichtung (180) zum Messen des durch die modulierten Magnetspannung (Umag) hervorgerufenen Magnetstromes (Imag),
   - einen ersten passiven Magnetfeldsensor (300) zum Messen eines durch den Magnetstrom hervorgerufenen magnetischen Magnetflusses unter Bildung eines ersten Magnetflussmesswertes (Bm),
   - einen zweiten passiven Magnetfeldsensor (400) zum Messen eines durch den Schwebemagneten (200) hervorgerufenen zweiten, sich vom ersten Magnetfluss unterscheidenden Magnetflusses und zum Bilden eines zweiten Magnetflusswertes (Bm2),
   - eine mit der Messeinrichtung in Verbindung stehende Messwertbildungseinrichtung (150),

      - die unter Berücksichtigung der zeitlichen Änderung des Magnetstroms ($\Delta I$) aufgrund der Modulation der Magnetspannung ein die Induktivität des magnetischen Systems aus Schwebemagnet, Reaktionsschiene und Spalt angebenden Induktivitätswert (L) ermittelt und mit dem Induktivitätswert und dem Magnetstromwert (Imag) einen ersten Spaltwert (Sm1) bildet,
- die mit dem ersten Magnetflussmesswert (Bm) des ersten Magnetfeldsensors (300) und dem Magnetstromwert (Imag') der Messeinrichtung einen zweiten Spaltwert (Sm2) bildet,
- die mit dem ersten und dem zweiten Magnetflussmesswert (Bm, Bm2) einen dritten Spaltwert (S3m) bildet und
- die mit den drei Spaltwerten (Sm1, Sm2, Sm3) den Spaltmesswert erzeugt.

**Claims**

1. Method for measuring the gap (S) between a levitation magnet (20) of a vehicle of a magnetic levitation railroad and a fixed-position reaction rail (40) of the magnetic levitation railroad and for producing a gap measured value (Sm) which indicates the size of the gap, wherein the magnetic field (Bn, Bg, Bs), which is produced by the levitation magnet (20), or at least one measurement variable (L, Bm, Bm2) which is related to it is evaluated in order to form the gap measured value,
**characterized in that**

   - the magnet current (Imag) which flows through the levitation magnet is modulated by modulation of the magnet voltage (Umag) which is applied to the levitation magnet,
   - the change in the magnet current ($\Delta Im$) resulting from the modulation of the magnet voltage ($\Delta Um$) is detected and an inductance value (L) is determined which indicates the inductance of the magnetic system comprising the levitation magnet, reaction rail and gap,
   - and the gap measured value is formed using the inductance value (L) and the magnet current value (Imag).

2. Method according to Claim 1,
**characterized in that**
the inductance value is calculated taking into account the rate of change of the magnet current value and the change in the magnet voltage.

3. Method according to Claim 1 or 2,
**characterized in that**
the gap measured value is obtained by using a previously determined family of characteristics (195) in which gap values (Sm1) are entered for different inductances (L) and magnet current values (Imag).

**4.** Method according to one of the preceding Claims 1-3, **characterized in that**, for magnet current values below a predetermined limit, the gap value (Sm1) read from the family of characteristics in this way is still used as the gap measured value (Sm), and **in that**, for magnet current values above the limit, a further measurement is taken.

**5.** Method according to Claim 4, **characterized in that**

- a total magnetic flux (Bg) caused by the levitation magnet or a component (Bs, Bn) thereof is measured using a passive magnetic field sensor (300) in the course of the further measurement, with a magnetic flux measured value (Bm) being formed, and
- a second gap value (Sm2) is deduced from the magnetic flux measured value (Bm) and the magnet current value (Imag).

**6.** Method according to Claim 5, **characterized in that** the second gap value (Sm2) is obtained by using a previously determined second family of characteristics (310) in which gap values (sm2) are entered for different magnetic flux measured values (Bm) and magnet current values (Imag).

**7.** Method according to one of the preceding Claims 5-6, **characterized in that** in cases in which the first family of characteristics produces two possible different gap values, that gap value of the first family of characteristics which is closer to the second gap value is averaged with the second gap value, the gap measured value being formed.

**8.** Method according to Claim 1, **characterized in that**

- a magnetic flux which is caused by a magnet current (Imag) flowing through the levitation magnet is measured using a passive magnetic field sensor (300) with a magnetic flux measured value (Bm) being formed, and
- the gap measured value (Sm2) is formed on the basis of the magnetic flux measured value (Bm) and the magnet current value (Imag).

**9.** Method according to Claim 8, **characterized in that** the gap measured value is obtained by using a previously determined family of characteristics (310) in which gap values (Sm2) are entered for different magnetic flux measurement values (Bm) and magnet current values (Imag).

**10.** Method according to Claim 1, **characterized in that**

- a first magnetic flux, which is caused by the levitation magnet, is measured using a first passive magnetic field sensor (300), with a first magnetic flux value (Bm) being formed, and a second magnetic flux, which is caused by the levitation magnet and differs from the first magnetic flux, is measured using a second passive magnetic field sensor (400), with a second magnetic flux value (Bm2) being formed, and
- the gap measured value is obtained by using a previously determined family of characteristics (410) in which gap values (Sm2) are entered for different measured value pairs for the first magnetic flux (Bm) and the second magnetic flux (Bm2).

**11.** Arrangement for measuring the gap (S) between a levitation magnet (20) of a vehicle of a magnetic levitation railroad and a fixed-position reaction rail (40) of the magnetic levitation railroad and for producing a gap measured value (Sm) which indicates the size of the gap, wherein the arrangement has an evaluation device (100) which evaluates the magnetic field (Bg, Bn, Bs) produced by the levitation magnet (20) or at least one measurement variable (L, Bm, Bm2) associated with it in order to determine the gap measured value, **characterized in that** the evaluation device (100) has:

- a signal source (110) for producing an electrical modulation voltage (ΔU(t)) for modulating the magnet voltage (Umag) which is applied to the levitation magnet,
- a measurement device (180), which is connected to the levitation magnet, for measuring the magnet current (Imag) caused by the modulated magnet voltage (Umag),
- a measured value formation device (150) which is connected to the measurement device and determines an inductance value (L), which indicates the inductance of the magnetic system comprising the levitation magnet, reaction rail and gap, taking into account the rate of change of the magnet current (ΔI) on the basis of the modulation of the magnet voltage, and forms the gap measured value using the inductance value and the magnet current value (Imag).

**12.** Arrangement according to Claim 11, **characterized in that** the evaluation device has:

- a measurement device (180) for measuring the magnet current (Imag) flowing through the levitation magnet (20),

- a passive magnetic field sensor (300) for measuring the magnetic flux caused by the magnet current, with a magnetic flux measured value (Bm) being formed, and

- a measured value formation device (150) which forms the gap measured value (Sm) using the magnetic flux measured value (Bm) of the magnetic field sensor and the magnet current value (Imag').

13. Arrangement according to Claim 11,
    **characterized in that**
    the evaluation device has:

    - a first passive magnetic field sensor (300) for measuring a first magnetic flux caused by the levitation magnet (200) and for forming a first magnetic flux measured value (Bm),

    - a second passive magnetic field sensor (400) for measuring a second magnetic flux, which is caused by the levitation magnet (200) and differs from the first magnetic flux, and for forming a second magnetic flux measured value (Bm2), and

    - a measured value formation device which forms the gap measured value (Sm) using the first and the second magnetic flux measured value (Bm, Bm2).

14. Arrangement according to one of the preceding Claims 11-13,
    **characterized in that**
    the evaluation device (100) has

    - a signal source (110) for producing an electrical modulation voltage ($\Delta U(t)$) for modulating the magnet voltage (Umag) which is applied to the levitation magnet,

    - a measurement device (180), which is connected to the levitation magnet, for measuring the magnet current (Imag) caused by the modulated magnet voltage (Umag),

    - a first passive magnetic field sensor (300) for measuring a magnetic flux caused by the magnet current, with a first magnetic flux measured value (Bm) being formed,

    - a second passive magnetic field sensor (400) for measuring a second magnetic flux, which is caused by the levitation magnet (200) and differs from the first magnetic flux, and for forming a second magnetic flux measured value (Bm2), and

    - a measured value formation device (150) which is connected to the measurement device,

- which measured value formation device (150) determines an inductance value (L), which indicates the inductance of the magnetic system comprising the levitation magnet, reaction rail and gap, taking into account the rate of change of the magnet current ($\Delta I$) on the basis of the modulation of the magnet voltage, and forms a first gap value (Sm1) using the inductance value and the magnet current value (Imag),

- which forms a second gap value (Sm2) using the first magnetic flux measured value (Bm) of the first magnetic field sensor (300) and the magnet current value (Imag'),

- which forms a third gap value (S3m) using the first and the second magnetic flux measured values (Bm, Bm2), and

- which produces the gap measured value using the three gap values (Sm1, Sm2, Sm3).

**Revendications**

1. Procédé de mesure de l'entrefer (S) entre un aimant (20) de sustentation d'un véhicule d'un chemin de fer suspendu à aimant et un rail (40) de réaction, fixe en position, du chemin de fer suspendu à aimant et d'obtention d'une valeur (Sm) de mesure indiquant la dimension de l'entrefer, dans lequel, pour former la valeur de mesure de l'entrefer, on exploite le champ (Bn, Bg, Bs) magnétique produit par l'aimant (20) de sustentation ou au moins une grandeur (L, Bm, Bm2) de mesure, qui en est connexe, **caractérisé en ce que**

    - on module le courant (Imag) d'aimant passant dans l'aimant de sustentation en modulant la tension (Umag) d'aimant s'appliquant à l'aimant de sustentation,

    - on détecte la variation du courant ($\Delta Im$) d'aimant en raison de la modulation de la tension ($\Delta Um$) d'aimant et on détermine une valeur (L) de l'induction, indiquant l'induction du système magnétique composée de l'aimant de sustentation du rail de réaction et de l'entrefer,

    - et on forme la valeur de mesure de l'entrefer avec la valeur (L) de l'inductance et avec la valeur (Imag) du courant d'aimant.

2. Procédé suivant la revendication 1,
    **caractérisé en ce que**
    l'on calcule la valeur de l'inductance en tenant compte de la variation, en fonction du temps, de la valeur du courant d'aimant et de la variation de la tension d'aimant.

3. Procédé suivant la revendication 1 ou 2,

**caractérisé en ce que**

l'on obtient la valeur de mesure de l'entrefer en tirant parti d'une famille (195) de courbes caractéristiques déterminée auparavant, dans laquelle des valeurs (Sm1) de l'entrefer sont portées pour des inductances (L) différentes et des valeurs (Imag) de courant d'aimant différentes.

4. Procédé suivant l'une des revendications 1 à 3, **caractérisé en ce que**,

pour des valeurs de courant d'aimant en dessous d'une limite donnée à l'avance, on continue à utiliser, comme valeur (Sm) de mesure d'entrefer, la valeur (Sm1) d'entrefer lue de cette façon dans la famille de courbes caractéristiques et, pour des valeurs de courant d'aimant au dessus de la limite, on effectue une autre mesure.

5. Procédé suivant la revendication 4, **caractérisé en ce que**,

   - dans le cadre de l'autre mesure, on mesure, par un capteur (300) passif de champ magnétique, un flux (Bg) magnétique global provoqué par l'aimant de sustentation ou une proportion (Bs, Bn) de celui-ci, en formant une valeur (Bm) de mesure de flux magnétique et
   - à l'aide de la valeur (Bm) de mesure de flux magnétique et de la valeur (Imag) de courant d'aimant, on décide d'une deuxième valeur (Sm2) d'entrefer.

6. Procédé suivant la revendication 5, **caractérisé en ce que**

l'on obtient la deuxième valeur (Sm2) d'entrefer en tirant parti d'une deuxième famille (310) de courbes caractéristiques déterminée auparavant, dans laquelle sont portées des valeurs (sm2) d'entrefer, pour des valeurs (Bm) de mesure de flux magnétique différentes et des valeurs (Imag) de courant d'aimant différentes.

7. Procédé suivant l'une des revendications 5 à 6, **caractérisé en ce que**,

dans le cas où la première famille de courbe caractéristique fournit deux valeurs d'entrefer possibles différentes, on fait la moyenne, avec formation de la valeur de mesure d'entrefer, de la valeur d'entrefer de la première famille de courbes caractéristiques, qui est la plus proche de la deuxième valeur d'entrefer, et de la deuxième valeur d'entrefer.

8. Procédé suivant la revendication 1, **caractérisé en ce que**

   - par un capteur (300) passif de champ magnétique, on mesure, avec formation d'une valeur (Bm) de mesure de flux magnétique, un flux magnétique d'aimant, provoqué par un courant (Imag) d'aimant passant dans l'aimant de sustentation et
   - à l'aide de la valeur (Bm) de mesure de flux d'aimant et de la valeur (Imag) de courant d'aimant, on forme la valeur (Sm2) de mesure d'entrefer.

9. Procédé suivant la revendication 8, **caractérisé en ce que**

l'on obtient la valeur de mesure d'entrefer en tirant parti d'une famille (310) de courbes caractéristiques déterminée auparavant, dans laquelle sont portées des valeurs (Sm2) d'entrefer, pour des valeurs (Bm) de mesure de flux d'aimant différentes et des valeurs (Imag) de courant d'aimant différentes.

10. Procédé suivant la revendication 1, **caractérisé en ce que**

    - par un premier capteur (300) passif de champ d'aimant, on mesure un premier flux d'aimant provoqué par l'aimant de sustentation, avec formation d'une première valeur (Bm) de flux d'aimant et, par un deuxième capteur (400) passif de flux d'aimant, on mesure un deuxième flux d'aimant provoqué par l'aimant de sustentation et différent du premier flux d'aimant, avec formation d'une deuxième valeur (Bm2) de flux d'aimant et
    - **en ce que** l'on obtient la valeur de mesure de l'entrefer en tirant parti d'une famille (410) de courbes caractéristiques déterminée auparavant, dans laquelle sont portées des valeurs (Sm2) d'entrefer, pour des paires différentes des valeurs de mesure du premier flux (Bm) d'aimant et du deuxième flux (Bm2) d'aimant.

11. Agencement de mesure de l'entrefer (S) entre un aimant (20) de sustentation d'un véhicule d'un chemin de fer suspendu à aimant et d'un rail (40) de réaction, fixe en position, du chemin de fer suspendu à aimant, pour produire une valeur (Sm) de mesure de l'entrefer indiquant la grandeur de l'entrefer, dans lequel l'agencement a un dispositif (100) d'exploitation, qui exploite le champ (Bg, Bn, Bs) d'aimant, produit par l'aimant (20) de sustentation, ou au moins une grandeur (L, Bm, Bm2) de mesure qui en est connexe, pour déterminer la valeur de mesure de l'entrefer,

    **caractérisé en ce que**

    le dispositif (100) d'exploitation a :

    - une source (110) de signal, pour produire une tension ($\Delta U(t)$) de modulation électrique, pour moduler la tension (Umag) d'aimant appliquée à l'aimant de sustentation,
    - un dispositif (180) de mesure, en liaison avec l'aimant de sustentation, pour mesurer le courant (Imag) d'aimant provoqué par la tension (Umag) d'aimant modulée,

- un dispositif (150) de formation de valeur de mesure, qui est en liaison avec le dispositif de mesure et qui, en tenant compte de la variation, en fonction du temps, du courant (ΔI) d'aimant, en raison de la modulation de la tension d'aimant, détermine une valeur (L) d'inductance, indiquant l'inductance du système magnétique composé de l'aimant de sustentation, du rail de réaction et de l'entrefer, et forme la valeur de mesure de l'entrefer avec la valeur d'inductance et la valeur (Imag) de courant d'aimant.

**12.** Agencement suivant la revendication 11, **caractérisé en ce que** le dispositif d'exploitation a :

- un dispositif (180) de mesure, pour mesurer le courant (Imag) d'aimant passant dans l'aimant (20) de sustentation,
- un capteur (300) passif de champ d'aimant, pour mesurer le flux d'aimant magnétique provoqué par le courant d'aimant, avec formation d'une valeur (Bm) de mesure du flux d'aimant et
- un dispositif (150) de formation de valeur de mesure, qui forme la valeur (Sm) de mesure de l'entrefer avec la valeur (Bm) de mesure de flux d'aimant du capteur de champ d'aimant et la valeur (Imag') de courant d'aimant.

**13.** Agencement suivant la revendication 11, **caractérisé en ce que** le dispositif d'exploitation a :

- un premier capteur (300) passif de champ d'aimant, pour mesurer un premier flux d'aimant provoqué par l'aimant (200) de sustentation et pour former une première valeur (Bm) de mesure de flux d'aimant,
- un deuxième capteur (400) passif de champ d'aimant, pour mesurer un deuxième flux d'aimant, provoqué par l'aimant (200) de sustentation et différent du premier flux d'aimant et pour former une deuxième valeur (Bm2) de mesure de flux d'aimant et
- un dispositif de formation de valeur de mesure, qui forme la valeur (Sm) de mesure d'entrefer avec la première et la deuxième valeur (Bm, Bm2) de mesure de flux d'aimant.

**14.** Agencement suivant l'une des revendications précédentes 11 à 13, **caractérisé en ce que** le dispositif (100) d'exploitation a :

- une source (110) de signal, pour produire une tension (Δu(t)) de modulation électrique, afin de moduler la tension (Umag) d'aimant appliquée à l'aimant de sustentation,

- un dispositif (180) de mesure en liaison avec l'aimant de sustentation, pour mesurer le courant (Imag) d'aimant, provoqué par la tension (Umag) d'aimant modulée,

- un premier capteur (300) passif de champ d'aimant, pour mesurer un flux d'aimant magnétique, provoqué par le courant d'aimant, avec formation d'une première valeur (Bm) de mesure de flux d'aimant,

- un deuxième capteur (400) passif de champ d'aimant, pour mesurer un deuxième flux d'aimant, provoqué par l'aimant (200) de sustentation et différent du premier flux d'aimant, et pour former une deuxième valeur (Bm2) de flux d'aimant,

- un dispositif (150) de formation de valeur de mesure en liaison avec le dispositif de mesure, qui, en tenant compte de la variation en fonction du temps du courant (ΔI) d'aimant, en raison de la modulation de la tension d'aimant, détermine une valeur (L) d'inductance, indiquant l'inductance du système magnétique composé de l'aimant de sustentation, du rail de réaction et de l'entrefer et forme une première valeur (Sm1) d'entrefer avec la valeur d'inductance et la valeur (Imag) de courant d'aimant,

- qui forme une deuxième valeur (Sm2) d'entrefer avec la première valeur (Bm) de mesure de flux d'aimant du premier capteur (300) de champ d'aimant et la valeur (Imag') de courant d'aimant du dispositif de mesure,

- qui forme une troisième valeur (S3m) d'entrefer avec la première et avec la deuxième valeur (Bm, Bm2) de mesure de flux d'aimant et

- qui produit la valeur de mesure de l'entrefer avec les trois valeurs (Sm1, Sm2, Sm3) d'entrefer.

## FIG 1

FIG 2

EP 2 061 672 B1

## FIG 3

## FIG 4

L=f(Strom); Parameter Spalt

FIG 5

EP 2 061 672 B1

FIG 6

FIG 7

# FIG 8

EP 2 061 672 B1

FIG 9

FIG 10

EP 2 061 672 B1

**IN DER BESCHREIBUNG AUFGEFÜHRTE DOKUMENTE**

**In der Beschreibung aufgeführte Patentdokumente**

- DE 3208896 A1
- FR 2161617 A

- DE 3323344 A1